# EUROPEAN PATENT SPECIFICATION

(11) **EP 1 850 028 B1**
(45) Date of publication and mention of the grant of the patent: **25.12.2013**
(21) Application number: 07008081.7
(22) Date of filing: 20.04.2007
(51) Int. Cl.: F16D 69/04

(54) **Brake lining, in particular a friction brake pad**
Bremsbelag, insbesondere für eine Reibungsbremse
Garniture de frein en particulier pour plaquette de frein à friction

(30) Priority: 25.04.2006 EP 06008550
(43) Date of publication of application: 31.10.2007
(73) Proprietor: Faiveley Transport Remscheid GmbH, 42859 Remscheid (DE)
(72) Inventor: Merkel, Thomas, Dr., 50354 Hürth (DE); Neller, Björn, 51107 Köln (DE); Watson, John, Ness, Neston Wirral CH64 4BB (GB)
(74) Representative: Richter Werdermann Gerbaulet Hofmann

(56) References cited:
- EP-A1- 1 605 180
- EP-A2- 1 265 002
- GB-A- 477 703
- GB-A- 629 618

## Description

### Technical field

The present invention relates to a brake lining according to the preamble of claim 1 (cf. prior art document EP 1 265 002 A2).

The present invention further relates to the design of and to a method for manufacturing such brake linings.

### Background and prior art

Modern train designs attempt to make use of the electric brake, of the hydrokinetic retarder or of other forms of dynamic brakes to dissipate the energy of braking and thereby to substantially reduce the demands on the friction brake. This is usually achieved by blending the dynamic brake with a friction brake in order to provide the required braking characteristic. Unfortunately, there are occasions, which may only be in about two percent to about five percent of the time, when the dynamic brake fails to operate.

In such occasion the vehicle is forced to use the friction brake only, and in so doing the vehicle puts a heavy demand on the friction brake. Therefore, the braking system either has to be designed for this maximum duty or a lower duty restriction or speed restriction has to be imposed.

In many cases a speed restriction causes problems for the railway network due to the effect on the timetable, so many authorities do not permit such reduction in performance and many more authorities would prefer that a reduction in performance would not be necessary. Moreover, some specifications demand that the vehicle can run for an extended period with the dynamic brake in the failed condition.

Most conventional friction pad designs contain a single pad material which is suitable for a limited range of duties due to the nature and limitations of the constituent materials. When selecting a friction pair there is traditionally the problem that the pad has to be selected to cover the most severe conditions.

However, the choice of materials and of components for ensuring full duty capability under reduced availability of dynamic brake often means that for the normal duty the materials and components are too aggressive, cause excessive wear as well as damage to each other and generally result in high operating cost and/or in high life cycle cost (LLC). Many times selecting the pad to cover the most severe conditions leads to high energy pads.

These in turn can lead to higher wear, cracks, or deflection of the brake disk or of the brake drum in normal operating conditions. On the other hand, many non-aggressive materials can maintain their friction stability at high temperatures well beyond their recognised operating limit but result in heavy, uneconomical wear to themselves, and may require very frequent changing, making them unsuitable for the high duty at degraded availability of dynamic brakes of about two percent to about five percent previously mentioned.

Regarding the technical background of the present invention reference is made to prior art document EP 0 581 988 A1, wherein a brake element is disclosed, which brake element comprises several blocks of friction material being arranged with interspaces (cf. for example Fig. 6A of prior art document EP 0 581 988 A1).

According to the known brake element described in prior art document EP 0 581 988 A1 the blocks of friction material are designed uniformly, i. e. a carrier body carries a uniform friction material block comprising several interspaces.

*A brake lining comparable to the one described in the chapter "Technical field" above is disclosed in prior art document* EP 1 605 180 A1*.*

A brake element as described in the chapter "Technical field" above is disclosed in prior art document WO 93/10370 A1. This brake element comprises a lining secured to a backing plate. Said known lining consists of - a layer of elastomeric material being supported by the backing plate, and - a layer of friction material being relatively hard compared with the layer of elastomeric material and being intended for the contact with the brake disk.

Thus, according to prior art document WO 93/10370 A1 the pad is constructed with at least two layers of material. The underlayer is a conformable material onto which a harder high duty material is attached. The aim is to give the harder material a spring base so making it more conformable and less aggressive to the disc. It is not intended that the underlayer comes into contact with brake disc.

Moreover, some blocks used on tread brakes have an elastic backing to increase the conformability similar to the pads described in prior art document WO 93/10370 A1.

### Disclosure of the present invention: problem, solution, advantages

Starting from the disadvantages and shortcomings as described above and taking the prior art as discussed into account, an object of the present invention is to further develop a brake lining of the kind as described in the chapter "technical field" above as well as a method as described in the chapter "technical field" above in such way that the brake lining can perform at least two kinds of brake operations, namely
- at least one low duty *dynamic* brake operation, for example at least one electrodynamic brake application, wherein the brake lining does not stress the brake disk or brake drum when getting in contact with said brake disk or brake drum, and
- at least one high duty brake operation, for example at least one mechanical brake application, wherein the brake lining puts higher mechanical brake power on the brake disk or brake drum than during the low duty brake operation.

The object of the present invention is achieved by a brake lining comprising the features of claim 1, by a brake comprising the features of claim 7 as well as by a method comprising the features of claim 9. Advantageous embodiments and expedient improvements of the present invention are disclosed in the respective dependent claims.

The present invention is principally based on the idea of providing a brake lining comprising at least two layers, in particular of providing a multi-layer brake pad or multi-layer brake lining, wherein the further layer, which is in particular designed as at least one soft top layer, is gentle to the brake disk or brake drum and covers most of the operating conditions.

The first layer, being in particular designed as at least one hard underlayer, comes into contact with the brake disk or brake drum under degraded conditions when the further layer is worn off, for example when at least one electrodynamic brake has failed.

By principally assigning the further layer to the brake disk or brake drum, at least one low duty brake operation, for example at least one dynamic brake application, such as at least one electrodynamic brake application, wherein the brake lining does not stress the brake disk or brake drum when getting in contact with said brake disk or brake drum, can be performed.

In case the further layer is worn off, at least one high duty brake operation, for example at least one mechanical brake application, wherein the brake lining puts higher mechanical brake power on the brake disk or brake drum than during the low duty brake operation, can be performed by the first layer being harder than the further layer.

According to a preferred embodiment of the present invention the brake lining being used in at least one dynamic brake operates under normal conditions, i. e. in the about 98 percent of the time that the dynamic brake is operational, with components suitable for the lower demand with lower life cycle costs (LLCs). The first layer or the high duty components only come into force when the dynamic brake fails.

Unlike conventional multilayer pads, according to the present invention the softer layer is supported by the first layer, in particular the top layer is the flexible part and the underlayer is the high energy part.

The brake lining according to the present invention as well as the method according to the present invention lead to the advantage that during normal brake duties these relatively low duties can be satisfied with the further layer, said further layer comprising in particular non aggressive low LCC pad material, but during higher brake duties, for example during at least one dynamic brake failure, the first layer, in particular being designed as at least one high performance pad, can be used.

Combining the low duty non-aggressive pad material with the more aggressive material leads to the advantage that the total duty envelope and optimum LCC can be fulfilled.

According to a preferred embodiment of the present invention the further layer, in particular the low duty pad material, is conformable and/or flexible, in particular comprises a low static and dynamic stiffness. The further layer being gentle to the brake disk or brake drum causes no or less wear as well as no or less damage at the brake disk or brake drum.

Favourably, low smoke emission appears when using the further layer. However, some smoke emission is allowed beyond the further layers normal specified operating temperature and specific power dissipation limit.

The pad wear properties of the further layer are advantageously appropriate for the low duty aspects and as good as possible for the high duty aspects without compromising conformability or wear of the brake disc or brake drum. Brake lining wear properties of the further layer are advantageously not worse than can be accomodated by a typical actuation slack adjuster and cylinder during a typical brake application cycle.

Independently thereof or in combination therewith, according to an advantageous embodiment of the present invention the further layer substantially comprises friction material providing friction properties in accordance with the leaflet UIC 541-3 of the International Union of Railways.

The friction level favourably meets the normal values defined by the various specifications laid in documents, such as BR 569 and UIC 541-3, under all operating conditions of the brake lining or of the so-called combined pad.

The friction material of the further layer may even provide stable friction up to the maximum defined for the combined pad.

The first layer, in particular the high duty material, advantageously comprises friction properties similar to the further layer so as to maintain the slowing down performance or stopping performance of the brake disc or brake drum, in particular of a vehicle to which said brake disc or brake drum is assigned, regardless of which layer is in contact with the brake disc or brake drum.

For example, a variation of plus/minus fifteen percent, preferably a variation of plus/minus five percent, throughout the performance range of the friction properties of the respective layers is acceptable.

The friction material of the first layer may provide stable friction to the maximum specified duty of the brake lining.

Advantageously low smoke emission appears when using the first layer, i. e. when the first layer gets in contact with the brake disc or brake drum.

According to a preferred embodiment of the present invention the first layer is as conformable as possible without compromising friction stability and pad wear at high temperature. Preferably the first layer is thermo-resistant, and wearing down of the first layer is advantageously low at high temperature. Thus, the first layer advantageously provides good pad wear at high temperature.

Wear and thermal damage of the brake disc or brake drum caused by braking with the first layer is preferably as low as possible without compromising friction stability.

The joint between the two layers, in particular between the two pad materials, comprises a shear strength, in particular both a hot shear strength and a cold shear strength, being not lower than either shear strength of the constituent layers or pad materials.

Typically this can be achieved by bonding, in particular by cross bonding, created chemically between the two layers or between the two pad materials whilst pressing and curing during manufacture. Moreover, at least one bonding agent may be used to assist the bonding.

The present invention further relates to a brake, in particular to a mechanical brake, comprising at least one brake lining as described above. Said brake may be a disc brake or a drum brake, for example a bogie brake, such as a centre bogie brake.

The present invention finally relates to the use of at least one brake lining, in particular of at least one friction brake pad, as described above in at least one brake as described above, of at least one vehicle, for example of at least one train.

Contrary to prior art, the present invention allows the vehicle, in particular the train, to continue at timetabled speed and duty even if the dynamic brake is not guaranteed to be fully reliable. In this context, the concept of the dynamic brake is to be understood as being a separate, non-contacting brake assisted by the friction brake.

Moreover, it will be appreciated by a man skilled in the art of braking that according to the present invention the rail network is not interfered.

A further advantage
- of the brake lining according to the present invention as well as
- of the brake according to the present invention being used in at least one vehicle, in particular in at least one train, as well as
- of the method according to the present invention
is that there is no requirement for a complicated control system to intervene in the operation of the vehicle in order to make it safe.

Moreover, the technology of the present invention is relatively simple in application and generates low cost.

### Brief explanation of the drawings

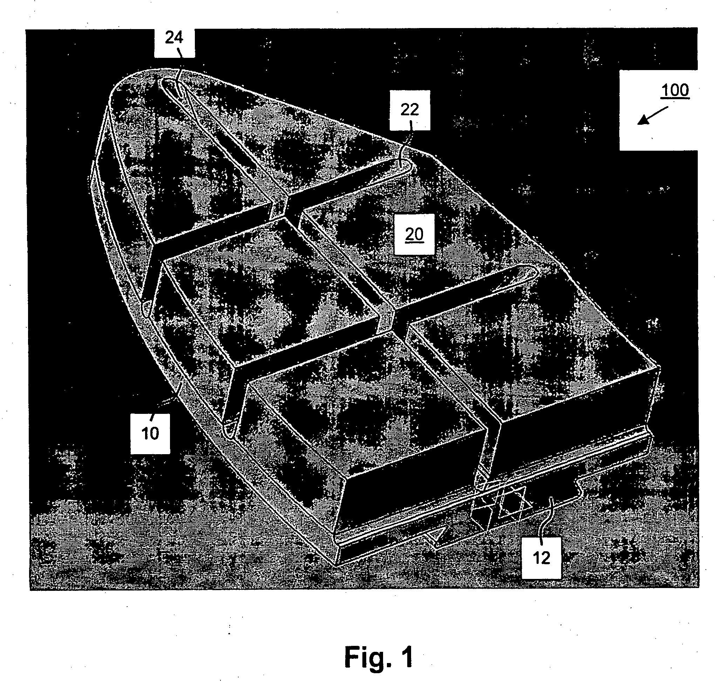

As already discussed above, there are several options to embody as well as to improve the teaching of the present invention in an advantageous manner. To this aim, reference is made to the claims respectively dependent on claim 1 and on claim 9; further advantages, features and improvements of the present invention are explained below in more detail with reference to a preferred embodiment by way of example and to the accompanying drawing where
Fig. 1 schematically shows a brake lining according to the present invention being provided by the method of the present invention.

### Best way of embodying the present invention

The brake lining or friction brake pad 100 depicted in Fig. 1 comprises a further layer 20, namely a layer of low duty pad material, being bonded or being attached on top of a first layer 10, namely on top of a layer of high duty pad material, wherein the layer of low duty pad material 20 is softer than the layer of high duty pad material 10.

Relating the properties of these layers 10, 20, the first layer 10 is relatively hard and more aggressive than the further layer 20, which is more gentle and soft.

The shape of the friction brake pad 100 is essentially oblong, in particular essentially shield like or essentially trapezium like. However, the shape of the friction brake pad 100 can also be rectangular. In any case, the shape of the friction brake pad 100 is advantageously in accordance with the leaflet UIC 541-3 of the International Union of Railways.

The proportions of the respective layers 10, 20 are dependant on the duty cycles envisaged but are most probably a thick layer of the low duty pad material 20 and a thin layer of the high duty pad material 10. Thus, the ratio of the thickness of the first layer 10 to the further layer 20 is preferably less than 1:1.

For example, the thickness of the first layer 10 can be in the range of about five millimeter to about sixteen millimeter, in particular in the range of about ten millimeter to about twelve millimeter; for example, the thickness of the further layer 20 can be in the range of about sixteen millimeter to about thirty millimeter, in particular in the range of about 23 millimeter to about 25 millimeter.

The first layer 10 of high duty pad material comprises a supporting element 12, in particular a backing plate, being connectable with at least one counterpart, in particular with at least one wheel, axle or brake caliper.

The further layer 20 of low duty material is partially grooved, both transversely (<--> reference numeral 22) and longitudinally (<--> reference numeral 24), for example to provide a measure of conformability, clear debris and to enable the circulation of air in order to provide a cooling effect when the further layer 20 is stressed and thus heated during braking.

The brake lining 100 is designed for application against a disc brake rotor.

The first layer 10 and the further layer 20 substantially comprise a mix of organic pad material. Favourable examples of first layer pad materials are the so-called Ferodo 3216F and Ferodo 3223F. Favourable examples of the further layer pad materials are the so-called Ferodo 3204F and Ferodo 3204/3F.

The brake lining 100 depicted in Fig. 1 functions as follows:

A vehicle, for example a train, comprising a mechanical brake, for example a disc brake or a drum brake, can be fitted with the brake lining 100 being designed as a combined pad as described above, in place of a conventional unilayer brake lining, in particular in place of a conventional high duty pad.

The layer 20 of low duty material is in contact with the disc braking surface or with the drum braking surface during normal operation. While the dynamic brake is in operation the low duty material brakes the vehicle normally with low disc wear or with low drum wear as well as with low disc damage or with low drum damage, and with good pad material life.

Should a failure of the dynamic brake occur the low duty pad will continue to contact the disc or drum and provide the same frictional behaviour. However, the wear rate will rapidly increase and some smoke may be given off due to the limitations of the low duty material. The vehicle will remain safe.

If it is not possible to rectify the dynamic brake immediately, for whatever reason, the low duty pad material layer 20 will wear out relatively rapidly, and the high duty layer 10 will contact the disc braking surface or drum braking surface.

The frictional behaviour will remain the same within the limits defined; the wear rate of the friction brake pad 100 will slow down. The friction brake pad 100 will continue to operate well within its limits until the vehicle can be brought in for rectification. The vehicle can continue to operate at full speed and at full weight during this period until rectification.

In normal operation the low duty pad 20 is allowed to wear out very closely to the layer 10 of high duty material before being replaced to optimise the use of the pad.

An occasional excursion into the high duty material will not cause a performance problem or will not significantly reduce the life of the disc or drum. Should the operator be willing to sacrifice some disc wear or drum wear and crazing life in exchange of the economies of wearing the high duty material completely out, the vehicle will still perform adequately.

### List of reference numerals

- 100: brake lining, in particular friction brake pad, for example multilayer pad or combined pad
- 10: first layer, in particular hard underlayer, for example layer of high duty pad material
- 12: supporting element, in particular backing plate of first layer 10
- 20: further layer, in particular layer of organic composite material or of elastomeric material or soft top layer, for example layer of low duty pad material
- 22: transverse groove of further layer 20
- 24: longitudinal groove of further layer 20

## Claims

1. A brake lining (100) for a vehicle comprising a dynamic brake, said brake lining (100) comprising
- at least one first layer (10) being a high duty pad material, and
- at least one further layer (20), in particular at least one layer of organic composite material or of elastomeric material, being a low duty pad material and being softer than the first layer (10),
wherein the further layer (20)
- is supported by the first layer (10) and
- is assigned to at least one brake disk or at least one brake drum, in particular is designed for getting in contact with at least one brake disk or at least one brake drum causing the brake disk or brake drum to slow down or to stop,
**characterized in**
**that** the first layer (10) is thinner than the further layer (20).

2. The brake lining according to claim 1, **characterized by** a shape being essentially oblong, in particular essentially rectangular or essentially shield like or essentially trapezium like.

3. The brake lining according to claim 1 or 2, **characterized in**
- **that** the thickness of the first layer (10) is in the range of about five millimeter to about sixteen millimeter, in particular in the range of about ten millimeter to about twelve millimeter, and
- **that** the thickness of the further layer (20) is in the range of about sixteen millimeter to about thirty millimeter, in particular in the range of about 23 millimeter to about 25 millimeter.

4. The brake lining according to at least one of claims 1 to 3, **characterized in that** the further layer (20)
- is conformable and/or
- is attached, in particular bonded, for example cross bonded, to the first layer (10) with a shear strength being at least as high
-- as the shear strengths of the layers (10, 20) or
-- as the higher one of the respective shear strength of the layers (10, 20).

5. The brake lining according to at least one of claims 1 to 4, **characterized in that** the first layer (10) and the further layer (20) substantially comprise respective friction material providing respective friction properties wherein the discrepancy of the friction properties, for example of at least one defined parameter or value rendering the friction properties, of the further layer (20) and of the first layer (10) is less than fifteen percent, for example less than five percent.

6. The brake lining according to at least one of claims 1 to 5, **characterized in that** the first layer (10)
- is thermo-resistant and/or
- comprises at least one supporting element (12), in particular at least one backing plate, being connectable with at least one counterpart, in particular with at least one wheel, axle or brake caliper.

7. A brake, in particular a mechanical brake, for example a disc brake or a drum brake, comprising at least one brake lining (100) according to at least one of claims 1 to 6.

8. Use of at least one brake lining (100) according to at least one of claims 1 to 6 in at least one brake according to claim 7 of at least one vehicle, for example of at least one train.

9. A method for manufacturing at least one brake lining (100) for a vehicle comprising a dynamic brake,
- wherein at least one first layer (10) being a high duty pad material is attached to at least one further layer (20), in particular to at least one layer of organic composite material or of elastomeric material, being a low duty pad material and being softer and thicker than the first layer (10), wherein the further layer (10) is supported by the first layer (10), and
- wherein the further layer (20) is assigned to at least one brake disk or at least one brake drum, in particular is designed for getting in contact with at least one brake disk or at least one brake drum causing the brake disk or brake drum to slow down or to stop.

10. The method according to claim 9, **characterized in that** the first layer (10) is attached to the further layer (20) by bonding, in particular by cross bonding, in particular such that the first layer (10) is attached to the further layer (20) with a shear strength being at least as high
- as the shear strengths of the layers (10, 20) or
- as the higher one of the respective shear strengthof the layers (10, 20).

## Patentansprüche

1. Bremsbelag (100) für ein Fahrzeug, das eine dynamische Bremse aufweist, wobei der Bremsbelag (100) Folgendes aufweist:
- mindestens eine erste Schicht (10), die ein Hochleistungs-Bremsbelagmaterial ist, und
- mindestens eine weitere Schicht (20), insbesondere mindestens eine Schicht aus organischem Verbundwerkstoff oder Elastomermaterial, die ein Bremsbelagmaterial mit niedriger Leistung und weicher ist als die erste Schicht (10),
wobei die weitere Schicht (20)
- von der ersten Schicht (10) getragen wird und
- mindestens einer Bremsscheibe oder mindestens einer Bremstrommel zugewiesen ist, insbesondere konzipiert ist, um in Berührung mit mindestens einer Bremsscheibe oder mindestens einer Bremstrommel zu gelangen, was die Bremsscheibe oder Bremstrommel veranlasst, langsamer zu werden oder zu stoppen,
**dadurch gekennzeichnet,**
**dass** die erste Schicht (10) dünner ist als die weitere Schicht (20).

2. Bremsbelag nach Anspruch 1, **gekennzeichnet durch** eine Form, die im Wesentlichen länglich ist, insbesondere im Wesentlichen rechteckig oder im Wesentlichen schildförmig oder im Wesentlichen trapezähnlich.

3. Bremsbelag nach Anspruch 1 oder 2, **dadurch gekennzeichnet**
- **dass** die Stärke der ersten Schicht (10) in dem Bereich von etwa fünf Millimeter bis etwa sechzehn Millimeter liegt, insbesondere in dem Bereich von etwa zehn Millimeter bis etwa zwölf Millimeter, und
- **dass** die Stärke der weiteren Schicht (20) in dem Bereich von etwa sechzehn Millimeter bis etwa dreißig Millimeter, insbesondere in dem Bereich von etwa 23 Millimeter bis etwa 25 Millimeter liegt.

4. Bremsbelag nach mindestens einem der Ansprüche 1 bis 3, **dadurch gekennzeichnet, dass** die weitere Schicht (20)
- formanpassungsfähig ist und/oder
- an der ersten Schicht (10) befestigt, insbesondere geklebt ist, zum Beispiel verkreuzt mit einer Scherfestigkeit geklebt ist, die mindestens so hoch ist
-- wie die Scherfestigkeit der Schichten (10, 20) oder
-- wie die höhere der jeweiligen Scherfestigkeit der Schichten (10, 20).

5. Bremsbelag nach mindestens einem der Ansprüche 1 bis 4, **dadurch gekennzeichnet, dass** die erste Schicht (10) und die weitere Schicht (20) im Wesentlichen jeweils Reibungsmaterial aufweisen, das jeweilige Reibungseigenschaften bereitstellt, wobei die Diskrepanz der Reibungseigenschaften, zum Beispiel von mindestens einem definierten Parameter oder Wert, der die Reibungseigenschaften darstellt, der weiteren Schicht (20) und der ersten Schicht (10) kleiner ist als fünfzehn Prozent, zum Beispiel kleiner als fünf Prozent.

6. Bremsbelag nach mindestens einem der Ansprüche 1 bis 5, **dadurch gekennzeichnet, dass** die erste Schicht (10)
- wärmebeständig ist und/oder
- mindestens ein Tragelement (12) aufweist, insbesondere mindestens eine Trägerplatte, die mit mindestens einem Gegenstück verbindbar ist, insbesondere mit mindestens einem Rad, einer Achse oder einer Bremszange.

7. Bremse, insbesondere eine mechanische Bremse, zum Beispiel eine Scheibenbremse oder eine Trommelbremse, die mindestens einen Bremsbelag (100) nach mindestens einem der Ansprüche 1 bis 6 aufweist.

8. Einsatz mindestens eines Bremsbelags (100) nach mindestens einem der Ansprüche 1 bis 6 in mindestens einer Bremse nach Anspruch 7 mindestens eines Fahrzeugs, zum Beispiel mindestens eines Zugs.

9. Verfahren zum Herstellen mindestens eines Bremsbelags (100) für ein Fahrzeug, das eine dynamische Bremse aufweist,
- wobei mindestens eine erste Schicht (10), die ein Hochleistung-Bremsbelagmaterial ist, an mindestens einer weiteren Schicht (20) befestigt ist, insbesondere an mindestens einer Schicht aus organischem Verbundwerkstoff oder Elastomermaterial, die ein Bremsbelagmaterial mit niedriger Leistung ist und die weicher und dicker ist als die erste Schicht (10), wobei die weitere Schicht (20) von der ersten Schicht (10) getragen wird, und
- wobei die weitere Schicht (20), die mindestens einer Bremsscheibe oder mindestens einer Bremstrommel zugewiesen ist, insbesondere konzipiert ist, um mit mindestens einer Bremsscheibe oder mit mindestens einer Bremstrommel in Berührung zu kommen, um die Bremsscheibe oder die Bremstrommel zu veranlassen, langsamer zu werden oder zu stoppen.

10. Verfahren nach Anspruch 9, **dadurch gekennzeichnet, dass** die erste Schicht (10) an der weiteren Schicht (20) durch Kleben befestigt ist, insbesondere durch verkreuztes Kleben, insbesondere derart, dass die erste Schicht (10) an der weiteren Schicht (20) mit einer Scherfestigkeit befestigt ist, die mindestens so hoch ist
- wie die Scherfestigkeiten der Schichten (10, 20) oder
- wie die höhere der jeweiligen Scherfestigkeit der Schichten (10, 20).

## Revendications

1. Garniture de freins (100) pour un véhicule contenant un frein rhéostatique, ladite garniture de freins (100) comprenant
- au moins une première couche (10) étant un matériau tampon à rendement élevé, et
- au moins une couche supplémentaire (20), en particulier au moins une couche de matériau composite organique ou de matériau élastomère, étant un matériau tampon à rendement faible et plus doux que la première couche (10),
- dans lequel la couche supplémentaire (20)
- est soutenue par la première couche (10) et
- est assignée à au moins un disque de frein ou au moins un tambour de frein, en particulier est conçue pour entrer en contact avec au moins un disque de frein ou au moins un tambour de frein entraînant le ralentissement ou l'arrêt du disque de frein ou du tambour de frein,
**caractérisée en ce que** la première couche (10) est plus mince que la couche supplémentaire (20).

2. Garniture de freins selon la revendication 1, **caractérisée par** une forme essentiellement oblongue, en particulier essentiellement rectangulaire ou essentiellement sous forme de bouclier ou de trapèze.

3. Garniture de freins selon la revendication 1 ou 2, **caractérisée en ce que**
- l'épaisseur de la première couche (10) est dans la gamme d'environ cinq millimètres à environ six millimètres, en particulier dans la gamme d'environ dix millimètres à environ 12 millimètres, et
- l'épaisseur de la couche supplémentaire (10) est dans la gamme d'environ 16 millimètres à environ 30 millimètres, en particulier dans la gamme d'environ 23 millimètres à environ 25 millimètres.

4. Garniture de freins selon l'une quelconque des revendications 1 à 3,
**caractérisée en ce que** la couche supplémentaire (20)
- est conformable et/ou
- est attachée, en particulier liée, par exemple liée transversalement, à la première couche (10) avec une résistance au cisaillement au moins aussi élevée
- que la résistance au cisaillement des couches (10, 20) ou
- la plus élevée des résistances au cisaillement respectives des couches (10, 20).

5. Garniture de freins selon l'une quelconque des revendications 1 à 4, **caractérisée en ce que** la première couche (10) et la couche supplémentaire (20) comprennent substantiellement un matériau de frottement fournissant des propriétés de frottement respectives dans lesquelles la différence des propriétés de frottement, par exemple d'au moins un paramètre ou une valeur défini qui rend les propriétés de frottement, de la couche supplémentaire (20) et de la première couche (10) est inférieure à quinze pour cent, par exemple inférieure à cinq pour cent.

6. Garniture de freins selon l'une quelconque des revendications 1 à 5,
**caractérisée en ce que** la première couche (10)
- est thermorésistante et/ou
- comprend au moins un élément de support (12), en particulier au moins une plaque de support, pouvant être relié à au moins un équivalent, en particulier à au moins une roue, un essieu ou un étrier de frein.

7. Frein, en particulier un frein mécanique, par exemple un frein à disque ou un frein à tambour, comprenant au moins une garniture de freins (100) selon au moins l'une des revendications 1 à 6.

8. Utilisation d'une garniture de freins (100) selon au moins l'une des revendications 1 à 6 dans au moins un frein selon la revendication 7 d'au moins un véhicule, par exemple d'au moins un train.

9. Procédé pour fabriquer au moins une garniture de freins (100) pour un véhicule comprenant un frein dynamique,
- dans lequel au moins une première couche (10) étant un matériau tampon à rendement élevé fixé à au moins une autre couche (20), en particulier à au moins une couche d'un matériau composite organique ou élastomère, un matériau tampon à rendement faible, plus doux et plus épais que la première couche (10), dans lequel la couche supplémentaire (20) est supportée par la première couche (10) et
- dans lequel la couche supplémentaire (20) est assigné à au moins un disque de frein ou au moins un tambour de frein, en particulier est conçue pour se mettre en contact avec au moins un disque de frein ou au moins un tambour de frein causant le ralentissement ou l'arrêt du disque de frein ou du tambour de frein.

10. Procédé selon la revendication 9, **caractérisé en ce que** la première couche (10) est attaché à la couche supplémentaire (20) par une liaison, en particulier par réticulation, en particulier de sorte que la première couche (10) est attachée à la couche supplémentaire (20) avec une force de cisaillement au moins aussi élevée
- que la résistance au cisaillement des couches (10, 20) ou
- la plus élevée des résistances au cisaillement respectives des couches (10, 20).
